# EUROPEAN PATENT APPLICATION

(11) **EP 4 603 396 A1**
(43) Date of publication of application: **20.08.2025**
(21) Application number: 23889970.2
(22) Date of filing: 16.01.2023
(51) Int. Cl.: B64U 80/70

(54) **NEST, UNMANNED AERIAL VEHICLE AND UNMANNED AERIAL VEHICLE SYSTEM**

(30) Priority: 16.11.2022 CN 202223052318 U; 16.11.2022 CN 202223048754 U
(71) Applicant: Guangzhou Imapcloud Intelligent Technology Co., Ltd., Guangzhou, Guangdong 510000 (CN)
(72) Inventor: WU, Xumin, Guangzhou, Guangdong 510000 (CN); PAN, Yifeng, Guangzhou, Guangdong 510000 (CN); LI, Yong, Guangzhou, Guangdong 510000 (CN); ZHU, Jie, Guangzhou, Guangdong 510000 (CN); MA, Jinchao, Guangzhou, Guangdong 510000 (CN); HUANG, Wumeng, Guangzhou, Guangdong 510000 (CN); ZHAO, Xiaodan, Guangzhou, Guangdong 510000 (CN)
(74) Representative: LLR
(86) International application number: PCT/CN2023/072324
(87) International publication number: WO 2024/103517

(57) **Abstract**

A nest, including a landing ramp and a stopping structure, wherein the landing ramp has a landing position, and the stopping structure is arranged on the landing ramp and is using for stopping an unmanned aerial vehicle from continuously moving downwards at the landing position. The landing ramp includes a limiting inclined surface and contact inclined surfaces, wherein the limiting inclined surface has the landing position, and a guide portion is formed on each contact inclined surface and is used for guiding the unmanned aerial vehicle to move to the landing position. The nest has a simple structure, is convenient to control and has a smaller size.

## Description

### TECHNICAL FIELD

The present disclosure relates to the technical field of unmanned aerial vehicles and, in particular, to a nest, an unmanned aerial vehicle and an unmanned aerial vehicle system.

### BACKGROUND TECHNOLOGY

With the rapid development of science and technology, in recent years, the application of unmanned aerial vehicles (UAVs) for various industries has been increasingly widespread. Currently, the application of UAVs has extended to various fields such as aerial photography, agriculture and forestry plant protection, geological exploration, electric power inspection, oil and gas pipeline patrols, highway accident management, forest fire prevention patrols, polluted environment investigation, anti-terrorism and stability public security law enforcement, emergency rescue and relief, disaster relief and rescue, and coastline patrols.

Existing UAVs generally include fixed-wing UAVs and multi-rotor UAVs. Fixed-wing UAVs have the advantage of long endurance, but they typically require a long runaway for takeoff and landing, on the other hand, multi-rotor UAVs are capable of vertical takeoff and landing without a runway, but their endurance is low.

The existing UAVs used for inspection, reconnaissance, etc. as well as their accompanying nests for storing UAVs typically adopt mechanical storage. This storage method has the problems such as huge costs of components used such as robotic arms, hatches, as well as operating procedures, very low reliability, and frequent jamming and program errors, resulting in low practicality of the entire system. In addition, sizes of the nests are large, which is not conducive to transportation and relocation. At the same time, the current design process of a UAV nest typically involves designing the UAV nest based on the size and performance of an existing UAV or matching the UAV to the nest. This form of matching requires one party to always compromise for defects of the other party, and fails to bring into play the advantages of integrity, resulting in poor overall performance.

### SUMMARY

The present disclosure provides a nest, an unmanned aerial vehicle and an unmanned aerial vehicle system, aiming to solve the problems of a complex nest structure and a large occupied size in the existing unmanned aerial vehicle system, and to improve an overall performance of the unmanned aerial vehicle and the nest.

In order to solve the above technical problems, the technical solutions adopted in the present disclosure are:
A first solution provides a nest, used for a vertical take-off and landing unmanned aerial vehicle, including:
a landing ramp, allowing an UAV to slide downwards on the landing ramp, the landing ramp having a landing position; and
a stopping structure, the stopping structure being arranged on the landing ramp, and being using for stopping the UAV from continuously moving downwards at the landing position.

The landing ramp includes:
a limiting inclined surface, the limiting inclined surface having the landing position; and
contact inclined surfaces, the contact inclined surfaces being provided on both sides of the limiting inclined surface, guide portions being formed on the contact inclined surfaces and used for guiding the unmanned aerial vehicle to move to the landing position.

A second solution provides an unmanned aerial vehicle, including:
a body;
arm wings, provided on both sides of the body and including front arm wings and rear arm wings; and
power apparatuses, provided on the arm wings to provide power for movement of the UAV, the power apparatuses being provided on both the front arm wings and the rear arm wings;
where, the UAV has a rotorcraft mode and a fixed-wing mode, when the UAV is in the rotorcraft mode, the power apparatuses disposed on the front arm wings and the rear arm wings are arranged one in front of the other in a horizontal direction.

Beneficial effects of the present disclosure are:
The nest proposed in the present disclosure may easily adjust an attitude of the UAV during landing, enabling it to land to the landing position, by limiting a positional relationship in space, and by providing the limiting inclined surface, the contact inclined surfaces and the guide portions, which addresses the function of UAV attitude management that conventionally requires numerous control logics and robotic arms for conventional nests. Compared to the conventional UAV nests, the nest is simply in structure, easy to control, and has a smaller size, achieving new levels of reliability, economy, transportability, and maintainability.

The UAV and the nest proposed in the present disclosure are designed to be compatible with each other. The nest has the limiting inclined surface, the contact inclined surfaces and the guide portions for guiding the UAV to land, while the UAV has the body and the guide rods that match with these features, so that the UAV may easily land to a designated position within the nest, without excessive adjustments during the landing.

At the same time, the proposed UAV in the present disclosure, capable of flying in both the rotorcraft mode and the fixed-wing mode, can combine the advantage of multi-rotor UAVs, which do not require a runway, with the advantage of long endurance of fixed-wing UAVs. In addition, unlike previous rotor UAVs having hybrid wings or tilting mechanism, the UAV is capable of switching from the rotorcraft mode to the fixed-wing mode by regulating an output difference between the power apparatuses on the front arm wings and the rear arm wings. A control logic required throughout the entire flight process is simple, enabling safe and effective attitude switching.

In the unmanned aerial vehicle system proposed in the present disclosure, the UAV and its compatible nest are designed to match each other, and the matching of their landing mode, onboard charging system, sensing system, etc. enables both of them to simultaneously exhibit their respective strengths in this field, and their characteristics can be perfectly combined in application scenarios, so as to achieve a synergistic effect where the whole is greater than the sum of its parts.

### BRIEF DESCRIPTION OF THE DRAWINGS

In order to more clearly illustrate the technical solution of embodiments of the present disclosure, the accompanying drawings required for use in the description of the embodiments will be briefly introduced below. Obviously, the accompanying drawings described below are some embodiments of the present disclosure. For those of ordinary skill in the art, other accompanying drawings can be obtained like these accompanying drawings without making creative labor.
Fig. 1 is a schematic structural diagram of a landing ramp of a nest in an embodiment of the present disclosure;
Fig. 2 is a schematic structural diagram of the landing ramp of the nest in another embodiment of the present disclosure;
Fig. 3 is a schematic structural diagram of a hatch cover of the nest in an embodiment of the present disclosure;
Fig. 4 is a schematic structural diagram within a groove of a limiting post in an embodiment of the present disclosure;
Fig. 5 is a schematic structural diagram of a UAV in a rotorcraft mode in an embodiment of the present disclosure;
Fig. 6 is a schematic structural diagram of the UAV in a fixed-wing mode in an embodiment of the present disclosure;
Fig. 7 is a schematic structural diagram of the UAV in another viewing angle in an embodiment of the present disclosure;
Fig. 8 is a schematic diagram of the UAV switching from the rotorcraft mode to the fixed-wing mode in an embodiment of the present disclosure;
Fig. 9 is a schematic structural diagram of the UAV in the rotorcraft mode in another embodiment of the present disclosure;
Fig. 10 is a schematic structural diagram of the UAV in the fixed-wing mode in another embodiment of the present disclosure;
Fig. 11 is a schematic diagram of the UAV switching from the rotorcraft mode to the fixed-wing mode in another embodiment of the present disclosure;
Fig. 12 is a schematic diagram of the UAV in the rotorcraft mode in another structure in another embodiment of the present disclosure;
Fig. 13 is a schematic structural diagram of an unmanned aerial vehicle system (UAS) in an embodiment of the present disclosure; and
Fig. 14 is a schematic structural diagram of the UAS in another embodiment of the present disclosure.

### Illustration of reference numerals:

1. Nest, 11. Landing ramp, 12. Stopping structure, 13. Base plate, 14. Hatch cover, 15. Back plate, 110. Limiting inclined surface, 120. Contact inclined surface, 130. Guide portion, 140. Limiting post, 150. Limiting platform, 160. Avoidance space, 170. Rotating frame, 180. Tarpaulin, 101. Sensor patch radar, 102. Positive charging top rod, 103. Negative pressure plate;
2. Unmanned aerial vehicle (UAV), 210. Body, 220. Guide rod, 230. Arm wing, 231. Front arm wing, 232. Rear arm wing, 240. Power rod, 250. Propeller, 260. Electronic speed controller (ESC), 270. Longitudinal connecting wing, 280. Vertical wing, 201. Positive charging socket, 202. Negative charging patch.

### DETAILED DESCRIPTION OF EMBODIMENTS

The technical solution in embodiments of the present disclosure will be clearly and completely described below in conjunction with the accompanying drawings in the embodiments of the present disclosure, obviously, the embodiments described are a part of the embodiments of the present disclosure and not all of the embodiments. Based on the embodiments in the present disclosure, all other embodiments obtained by those of ordinary skill in the art without making creative labor fall within the scope of protection of the present disclosure.

In the description of the present disclosure, it should be understood that terms such as "center, " "longitudinal," "transverse," "length," "width," "thickness, " "upper," "lower," "front," "rear," "left," "ri ght," "vertical," "horizontal," "top," "bottom," "inner," " outer," "clockwise," or "counterclockwise," indicating an orientation or positional relationship based on the orientation or positional relationship shown in the accompanying drawings are used only for the convenience of describing the present disclosure and simplifying the description, and do not indicate or imply that the apparatus or element referred to must have a particular orientation, be constructed or operated in a particular orientation, and therefore should not be construed as limiting the present disclosure. Furthermore, the terms "first" and "second" are used for descriptive purposes only and are not to be understood as indicating or implying relative importance or implicitly specifying the number of technical features indicated. Thus, a feature defined with "first" or "second" may explicitly or implicitly include one or more of the stated features. In the description of the present disclosure, "multiple" means two or more, unless otherwise specifically defined.

It should also be understood that the terms used in the specification of the present disclosure are used for the purpose of describing particular embodiments only and are not intended to limit the present disclosure. As used in the specification and appended claims of the present disclosure, unless the context clearly indicates otherwise, the singular forms "a," "an," and "the" are intended to include the plural forms.

It should be further understood that the term "and/or" as used in the specification and appended claims of the present disclosure refers to any combination and all possible combinations of one or more of the items listed in association, and includes such combinations.

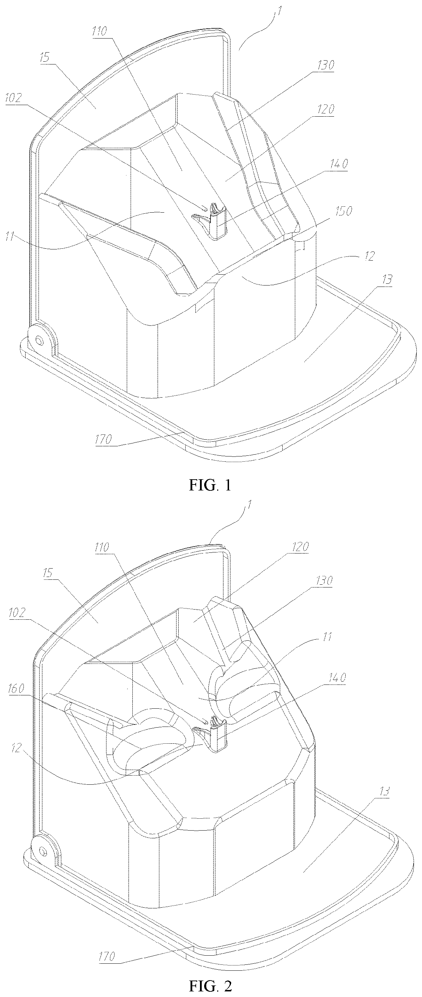

An embodiment of the present disclosure proposes a nest 1, used for a vertical take-off and landing unmanned aerial vehicle 2, as shown in Figs. 1-4, including a landing ramp 11 and a stopping structure 12, where, the landing ramp 11 may allow the UAV 2 to slide downwards on the landing ramp 11, the landing ramp has a landing position, the stopping structure 12 is arranged on the landing ramp 11, and is using for stopping the UAV 2 from continuously moving downwards at the landing position. A vertically landing aircraft is guided through the landing ramp 11 to slide downwards along the landing ramp 11, and stops sliding at the landing position on the slope by restriction of the stopping structure 12, allowing the UAV 2 to dock at the landing position.

The conventional nest 1 requires many robotic arms inside to adjust various attitudes of the UAV 2 during storage. An entire control process requires exceptionally complex and challenging control algorithms and robotic arm structures, which also results in occupying a substantially large volume of space in the nest 1, making it very difficult to deploy either on the ground or in a vehicle. The nest 1 proposed in the embodiment of the present disclosure is different from the conventional nest 1. Through the landing ramp 11 and the stopping structure 12 arranged on the landing ramp 11, the nest 1 enables the UAV 2 to dock to the landing ramp 11, changing the previous landing and docking methods of the UAV 2. The nest 1 is simply in structure, and has a smaller size, achieving new levels of reliability, economy, transportability, and maintainability.

In an alternative implementation, the landing ramp 11 includes a limiting inclined surface 110 and contact inclined surfaces 120, where, the limiting inclined surface 110 has the landing position; and the contact inclined surfaces 120 are provided on both sides of the limiting inclined surface 110, guide portions 130 are formed on the contact inclined surfaces 120 and used for guiding the UAV 2 to move to the landing position. In this embodiment, the nest 1 is adapted for the vertical take-off and landing UAV 2, and the UAV 2 has three contact points with the nest 1 during landing: one in the middle and the other two on both sides, and the three contact points are no longer on the same straight line. This three-point contact forms a stable guidance, allowing the UAV 2 to dock smoothly at the landing position.

Exemplarily, the contact point in the middle is a tail of the UAV 2, and the contact points on both sides are guide rods 220 provided on both sides of a body 210. When the UAV 2 is landing vertically, the tail of the body 210 is in contact with the limiting inclined surface 110, and the guide rods 220 on both sides of the body 210 are in contact with the contact inclined surfaces 120. When the UAV 2 is sliding downwards on the landing ramp 11, the guide rods 220 slide along the contact inclined surfaces 120 until they are in contact with the guide portions 130, and then continue to slide downwards along paths of the guide portions 130 to the landing position, and realize landing by stopping of the stop portion.

The contact inclined surfaces 120 arranged on both sides of the limiting inclined surface 110 and the guide portions 130 thereon cooperate with the contact points disposed on both sides, so that the UAV 2 can be corrected to a centered position regardless of whether the UAV 2 deviates to the left or to the right. In addition, when the UAV 2 lands, the contact point disposed in the middle is also simultaneously in contact with the limiting inclined surface 110 between the two contact inclined surfaces 120, so that the UAV 2 may be prevented from deviating too far from the center during landing, ensuring that the UAV 2 can be gradually corrected its position back to the landing position in the center, under the guidance of the guide portions 130 during the landing.

The nest 1 proposed in the embodiment of the present disclosure may easily adjust an attitude of the UAV 2 during landing, enabling it to land to the landing position, by limiting a positional relationship in space, and by providing the limiting inclined surface 110, the contact inclined surfaces 120 and the guide portions 130, which addresses the function of UAV 2 attitude management that conventionally requires numerous control logics and robotic arms for conventional nests 1. Compared to the conventional UAV 2 nests 1, the nest 1 is simply in structure, easy to control.

In an alternative implementation, the guide portions 130 are inclined from top to bottom in a direction close to the limiting inclined surface 110. In this way, the guide portions 130 on both sides of the limiting inclined surface 110 form a guiding structure that converges from the top to the bottom towards the center, and are capable of guiding the UAV 2 from an off-centre position to the centered position, docking at the landing position.

As shown in Fig. 1, the guide portions 130 may include, in addition to the abovementioned parts, a section articulated at the back parallel to an inclined line of the limiting inclined surface 110, thereby extending a guiding length. By the two parallel guide portions 130 cooperating with the two guide rods 220, the UAV 2 can be guided to the landing position more stably.

The guide portions 130 are preferably of a groove structure, formed by downwardly recessing the middle of the contact inclined surfaces 120, so that a smooth transition from the contact inclined surfaces 120 to the guide portions 130 may be achieved, and the UAV 2 can slide into the guide portions 130 through the contact inclined surfaces 120 regardless of which side of the guide portions 130 the UAV 2 lands on. Of course, the guide portions 130 may also be protrusions provided on the contact inclined surfaces 120.

In an alternative implementation, as shown in Fig. 1, Fig. 2, and Fig. 4, the stopping structure 12 includes a limiting post 140, the limiting post 140 is provided on the landing ramp 11, and the limiting post 140 is disposed in a path in which the UAV 2 slides downwardly along the landing ramp 11. When the UAV 2 encounters the limiting post 140 in the process of sliding downwardly, the UAV 2 is stopped by the limiting post 140 and stops sliding downwardly, and this position is the landing position of the UAV 2. A groove is formed between the limiting post 140 and the landing ramp 11, so that the UAV 2 can slide directly into the groove in the process of sliding downwardly, so that the landing of the UAV 2 is more stable. Inner-side surfaces of the groove are all vertical surfaces except for one side surface formed by the landing ramp 11, which may not affect the vertical take-off of the UAV 2.

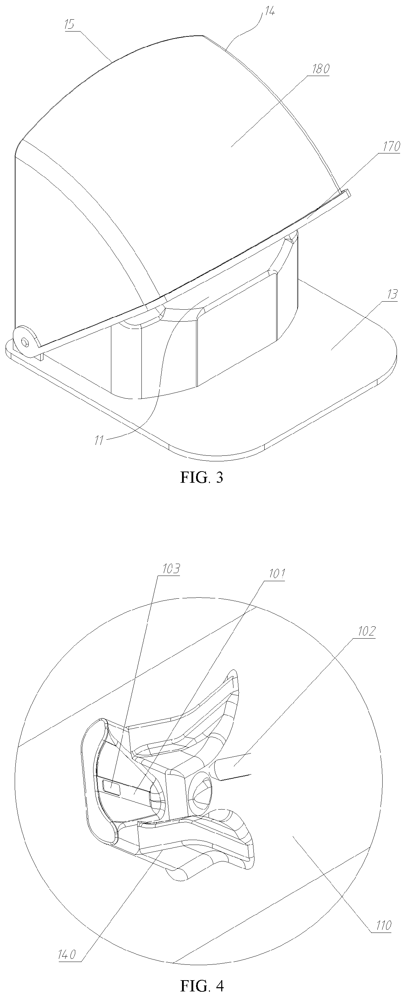

As shown in Fig. 4, the limiting post 140 may be designed as a charging pile, with a sensor patch radar 101, a positive charging top rod 102, and a negative pressure plate 103 provided in the groove. The sensor patch radar 101 and the negative pressure plate 103 are disposed within the groove on the side away from the limiting inclined surface 110, and the positive charging top rod 102 is disposed on the side close to the contact inclined surfaces 120, where the positive charging top rod 102 is driven by a servo to be able to reciprocating telescoping.

Exemplarily, the limiting post 140 is provided on the limiting inclined surface 110. When the UAV 2 lands, the tail of the body 210 comes into contact with the limiting inclined surface 110, and slides along the limiting inclined surface 110. A positive charging socket 201 is provided underneath the tail of the body 210, while a negative charging patch 202 is provided above the tail of the body 210. When the UAV 2 lands, an underside of the body 210 faces the limit inclined surface 110, and when the tail of the body 210 slides into the groove and docks to the designated position, the negative pressure plate 103 in the groove makes pressure contact with the negative charging patch 202 on the body 210. At the same time, when the sensor patch radar 101 detects that the UAV 2 is properly docked, it may send a remote sensing signal. Upon receiving this signal, the servo controls the positive charging top rod 102 to extend outward, and probe into the positive charging socket 201 on the body 210 to charge the UAV 2.

A carbon dioxide cylinder and a temperature sensor apparatus may also be added and installed to the nest 1. In the event of a charging-related fire accident, the temperature sensor can detect the fire based on temperature, and at the same time release carbon dioxide to extinguish the fire.

In an alternative implementation, as shown in Fig. 1, the stopping structure 12 includes a limiting platform 150, which is provided at lower ends of the guide portions 130. If the guide portions 130 are groove structures, an upward protruding structure is provided at the bottom of the limit inclined surface 110 and the contact inclined surfaces 120, which is blocked at the ends of the guide portions 130, and can stop the guide rods 220 when the UAV 2 slides down along the guide portions 130, so that the UAV 2 stops sliding, and this position is the landing position of the UAV 2.

The limiting post 140 and the limiting platform 150 may be used simultaneously or separately. When used simultaneously, the UAV 2 can be stably landed by stopping the body 210 using the limiting post 140 and stopping the guide rods 220 using the limiting platform 150.

In an alternative implementation, as shown in Fig. 2, the landing ramp 11 is also provided with an avoidance space 160 for avoiding propellers 250 of the UAV 2 from interfering with the landing and docking of the UAV 2.

A logistics goods placing/taking-off apparatus, a tethering apparatus, etc., may also be added and installed to the slope of the landing ramp 11, to cooperate with and used by the UAV 2, which is specially designed for logistics transportation.

In an alternative implementation, as shown in Figs. 1-3, the nest 1 further includes a base plate 13 and a hatch cover 14, where the landing ramp 11 is provided on the base plate 13, the hatch cover 14 is rotatably provided on the base plate 13, for opening and closing the nest 1. When the hatch cover 14 is closed, it may enclose the landing ramp 11 inside.

In an alternative implementation, the hatch cover 14 includes a rotating frame 170 and a tarpaulin 180. The rotating frame 170 is rotatable between a first position and a second position, one end of the tarpaulin 180 is fixed at the first position, the other end is fixed on the rotating frame 170, and the tarpaulin 180 encloses the landing ramp 11 inside when the rotating frame 170 rotates from the first position to the second position. The rotating frame 170 may be rotated by electrically driving. A support frame may be provided, by which the hatch cover 14 has a fixed shape when closed.

In a specific embodiment, a back plate 15 is also included. The back plate 15 is provided on the base plate 13, and arranged at an angle to the base plate 13, which may be vertically arranged. The first position is on the back plate 15, the second position is on the base plate 13, and the rotating frame 170 is rotatably provided between the back plate 15 and the base plate 13. One end of the tarpaulin 180 is provided on the back plate 15, the other end is provided on the rotating frame 170, when the rotating frame 170 rotates from the back plate 15 towards the base plate 13, it will drive the tarpaulin 180 to unfold, and when the rotating frame 170 rotates onto the base plate 13, it can enclose the landing ramp 11 inside, completing the closure of the nest 1. The back plate 15 may also adopt a structure where the tarpaulin 180 is installed within a fixed frame, which is more lightweight.

In addition, the first position and the second position may both be on the base plate 13, the rotating frame 170 is rotatably provided on the base plate 13, and a degree of rotation is required to rotate from the first position to the second position, one end of the tarpaulin 180 is provided at the first position, i.e., provided on the base plate 13, and the other end is provided on the rotating frame 170, so that when the rotating frame 170 rotates, it drives the tarpaulin 180 to unfold, and when the rotating frame 170 rotates to the second position, it may enclose the landing ramp 11 inside, completing the closure of the nest 1.

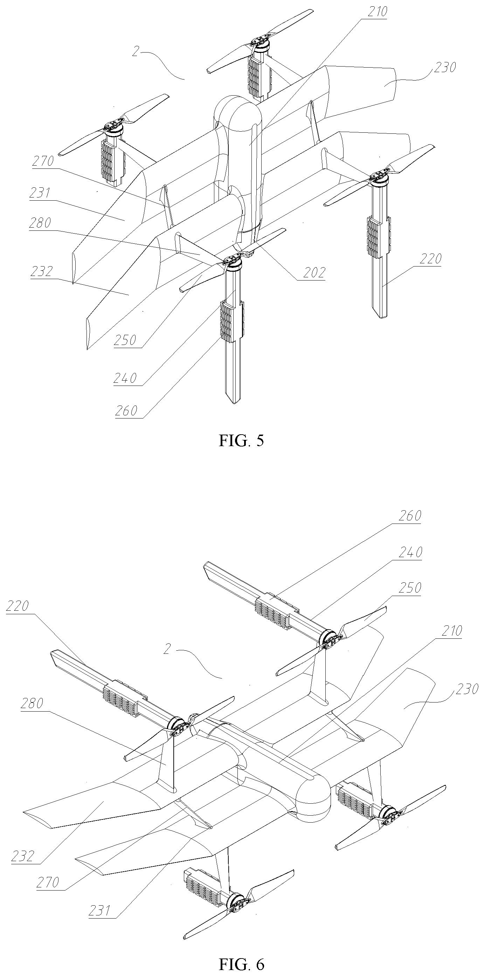

An embodiment of the present disclosure proposes an unmanned aerial vehicle 2, as shown in Figs. 5-12, including a body 210, arm wings 230 and power apparatuses, where, the arm wings 230 are provided on both sides of the body 210 and include front arm wings 231 disposed at the front and rear arm wings 232 disposed at the rear, and the power apparatuses are provided on the arm wings 230 to provide power for movement of the UAV 2. At least one power apparatus is provided on each arm wing 230, and the power apparatuses are provided on both the front arm wings 231 and the rear arm wings 232. By regulating an output of the power apparatuses, the UAV 2 may be rotated and switched between a rotorcraft mode and a fixed-wing mode. When the power output from the power apparatuses is in a direction perpendicular to a horizontal plane, the UAV 2 takes off, lands, and hovers vertically in the rotorcraft mode, increasing the output of the power apparatuses on the rear arm wings 232, enabling the UAV 2 to rotate around the center of gravity in the middle of the body 210, and when the power output from the power apparatuses generates a force in the horizontal direction, the UAV 2 switches from the rotorcraft mode to the fixed-wing mode. In addition, when the UAV 2 is in the rotorcraft mode, the power apparatuses disposed on the front arm wings 231 and the rear arm wings 232 are arranged one in front of the other in the horizontal direction. This layout of the arm wings 230 and the power apparatuses can share a torque by the front and rear pairs of arm wings 230 bearing a driving force of the power apparatuses separately, and the two pairs of arm wings 230 have a larger area of lifting body.

The embodiment of the present disclosure proposes the UAV 2 that is capable of flying in both the rotorcraft mode and the fixed-wing mode, combining the advantages of multi-rotor UAVs that do not require a runway and the long endurance of fixed-wing UAVs. In addition, unlike previous rotor UAVs 2 having 4+1 hybrid-wing or tilting mechanism, the UAV 2 is capable of switching from the rotorcraft mode to the fixed-wing mode by regulating the output difference between the power apparatuses on the front arm wings 231 and the rear arm wings 232. A control logic required throughout the entire flight process is simple, enabling safe and effective attitude switching.

In an alternative implementation, the power apparatus includes a power rod 240, a propeller 250, and an electronic speed controller (ESC) 260, where, the power rod 240 is provided on the arm wing 230 with a motor provided inside, the propeller 250 is provided at a front end of the power rod 240 and connected to the motor. When the UAV 2 is in the rotorcraft mode, the power rod 240 is vertical, so that the propeller 250 on the arm wing 230 presents a multi-rotor layout, and the ESC 260 is used for regulating an output of the motor and regulating a rotational speed of the propeller 250. The UAV 2 rotates by regulating the output of the power apparatus and switches between the rotorcraft mode and the fixed-wing mode.

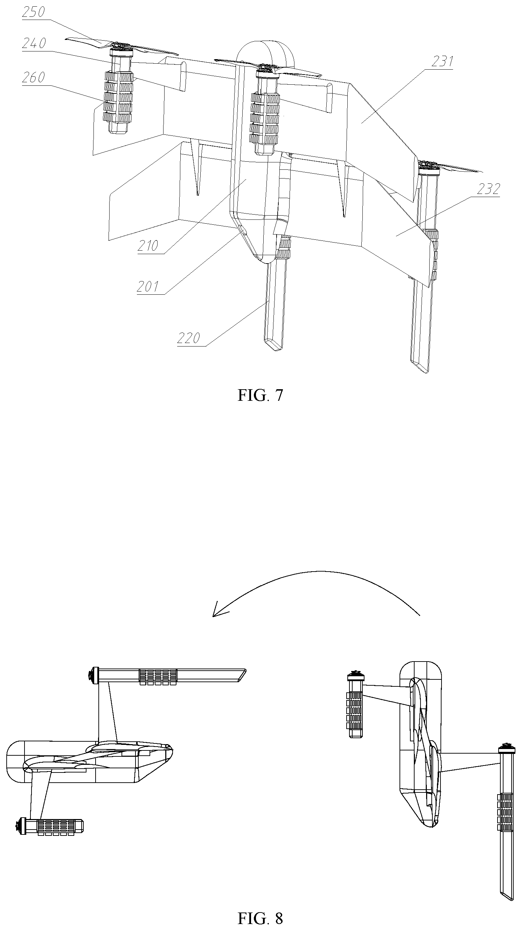

In a specific embodiment, as shown in Figs. 5-8, the UAV 2 is designed to have a better fixed-wing flight efficiency, and the body 210 and the arm wings 230 are designed based on a fixed-wing aircraft. The rotorcraft mode of the UAV 2 is as shown in Fig. 5, and the entire body 210 is vertical, and the fixed-wing mode is as shown in Fig. 6, and the entire body 210 is horizontal. The UAV 2 switching from the rotorcraft mode to the fixed-wing mode is as shown in Fig. 8.

The front arm wings 231 of the UAV 2 are disposed at a lower portion of the body 210, and the rear arm wings 232 are disposed at an upper portion of the body 210. The arm wings 230 constitute a tandem wing layout, which provides a significant improvement in fixed-wing flight performance over conventional fixed-wing UAVs2 and enables longer endurance flights.

Longitudinal connecting wings 270 are also provided between the front arm wings 231 and the rear arm wings 232, which may enhance strength of the arm wings 230 and can improve vertical stability.

The arm wings 230 are also provided with vertical wings 280, and the power rods 240 are provided on the vertical wings 280. The power rods 240 are provided on the arm wings 230 parallel to an axis of the body 210, such that the propellers 250 are disposed at positions beyond front-end surfaces of the arm wings 230, and front-extending surfaces of the arm wings 230 are outside diameters of the propellers 250. The vertical wings 280 are capable of holding the power rods 240 far away, which not only positions the propellers 250 at positions that protrudes from the arm wings 230 and not orthogonally intersected by the arm wings 230, but also increases a propeller pitch between the propellers 250 on the front arm wings 231 and the propellers 250 on the rear arm wings 232. The two arm wings 230 bear the driving force of the two sets of propellers 250 respectively, sharing the torque. The two arm wings 230 increase the area of lifting body. The two sets of propellers 250 vertical hovering wind field enclose all the lifting arm wings 230, block crosswinds, which have a significant impact on vertical flight, thereby enhancing a wind-resistant capability. The propellers 250 are outside the arm wings 230, allowing high-speed airflow during fixed-wing flight to bypass the surfaces of the arm wings 230, increasing a lifting force and efficiency. On the other hand, the vertical wings 280 can also function as vertical tails, help the UAV 2 to maintain balance, and assist in completing a steering action, etc. An RTK antenna may be set inside the vertical wings 280.

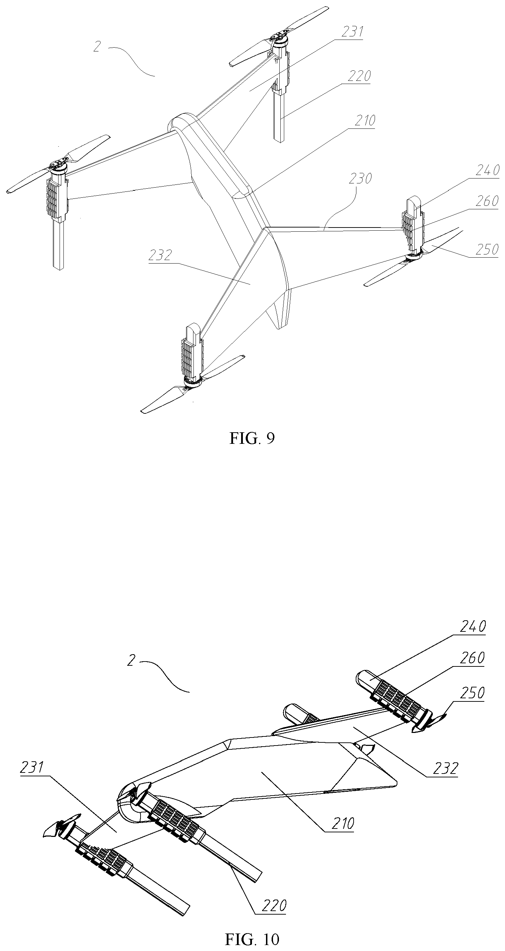

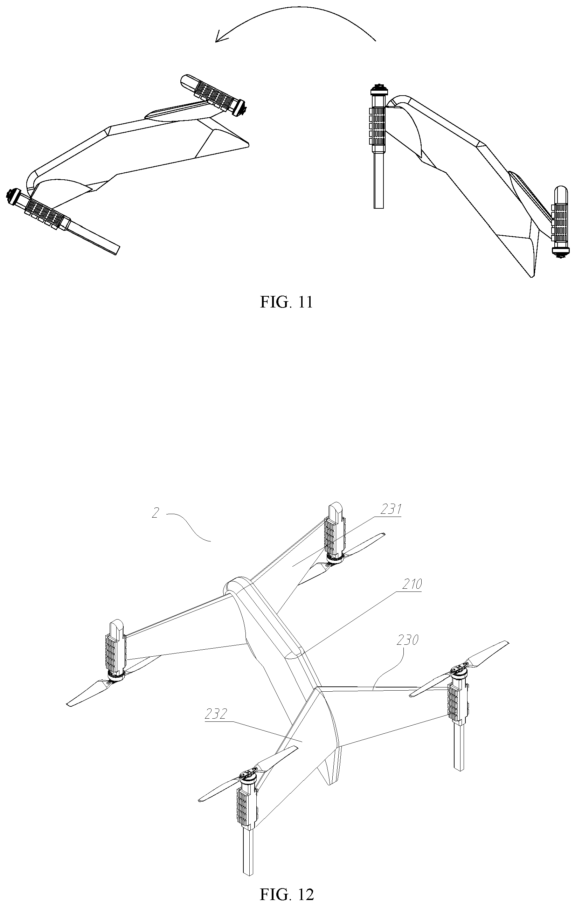

In a specific embodiment, as shown in Figs. 9-12, the UAV 2 is designed to have a better rotor flight efficiency, and the body 210 and the arm wings 230 are designed based on a multi-rotor UAV 2. Four arms are optimized into the arm wings 230, and when the UAV 2 is in the rotorcraft mode, both the two front arm wings 231 and the two rear arm wings 232 are at an acute angle to the horizontal plane, so that when the power apparatuses drive the UAV, both the front arm wings 231 and the rear arm wings 232 are able to increase the lifting force during the flight of the UAV 2. The rotorcraft mode is as shown in Fig. 9, where the body 210 has a certain upward tilt angle. The fixed-wing mode is as shown in Fig. 10, where a direction of the power supplied by the propellers 250 is at a certain angle to the horizontal plane, and the UAV 2 switched from the rotorcraft mode to the fixed-wing mode is as shown in FIG. 11.

There are two layout options for the power apparatuses on the front arm wings 231 and the two rear arm wings 232. The power rods 240 are disposed at ends of the arm wings 230 and at a certain angle to the arm wings 230. In one layout, when the UAV 2 is in the rotorcraft mode, the propellers 250 on the front arm wings 231 are disposed above the arm wings 230, and the propellers 250 on the rear arm wings 232 are disposed below the arm wings 230. In another layout, when the UAV 2 is in the rotorcraft mode, the propellers 250 on the front arm wings 231 are disposed below the arm wings 230, and the propellers 250 on the rear arm wings 232 are disposed above the arm wings 230. Both of the layout options enable one of the power apparatuses disposed on the front arm wings 231 and the power apparatuses disposed on the rear arm wings 232 to function as a pushing role while the other as a pulling role during the flight of the UAV 2, which can greatly improve the performance of the UAV 2 in the rotorcraft mode.

In an alternative implementation, when the UAV 2 is in the rotorcraft mode, a height difference between the propellers 250 on the front arm wings 231 and the rear arm wings 232 is 0%-50% of a center-to-center distance between the motors on the front arm wings 231 and the rear arm wings 232, which can ensure a flight capability of the UAV in the rotorcraft mode. When the height difference exceeds 50%, it becomes difficult for the UAV to fly. In a preferred embodiment, when the UAV 2 is in the rotorcraft mode, the propellers 250 on the front arm wings 231 are at the same height or at substantially the same height as the propellers 250 on the rear arm wings 232, which allows the UAV 2 to have a better performance of lateral movement in the rotorcraft mode. As shown in Fig. 12, when the UAV 2 is in the rotorcraft mode, with the head of the UAV in a higher position than the tail, the propellers 250 on the front arm wings 231 are disposed below the arm wings 230, and the propellers 250 on the rear arm wings 232 are disposed above the arm wings 230. Of course, the present disclosure is not limited to this implementation.

The arm wings 230 optimized from multi-rotor UAV arms are all close to triangular in shape, forming a delta wing configuration, and the front arm wings 231 and the rear arm wings 232 are arranged opposite each other, i.e., tips of the triangles all face towards the middle of the body 210, which may have a better effect.

In an alternative implementation, the UAV 2 further includes the guide rods 220, the guide rods 220 are provided on both sides of the body 210, and the guide rods 220 may be provided at rear ends of the power rods 240. The guide rods 220 guide the UAV 2 to land into the nest as the UAV 2 lands.

In an alternative implementation, the body 210 is provided with a battery inside, as shown in Fig. 5 and Fig. 7, the body 210 is provided with a positive charging socket 201 and a negative charging patch 202 at a tail. A battery equipment compartment is provided at the rear of the body 210, with the battery provided therein, and a connector for charging the battery for connection to the nest is provided at the tail of the body 210, where the positive charging socket 201 is disposed on a lower side of the tail of the body 210, and the negative charging patch 202 is disposed on an upper side of the tail of the body 210, to facilitate charging when the UAV 2 is docked on the nest.

In this embodiment, the UAV 2 adopts a charging mode, and the battery may be designed as either removable or non-removable. Of course, a battery replacement mode may also be adopted exclusively, without designing charging structures on the tail of the body 210 or within the groove.

In an alternative implementation, the head of the body 210 is provided with an acrylic hood, which is internally installed with a three-axis gimbal, allowing the UAV 2 to perform filming operations in both the rotorcraft mode and the fixed-wing mode. A flight control setup and a parachute compartment equipment are provided in an upper portion of the body 210.

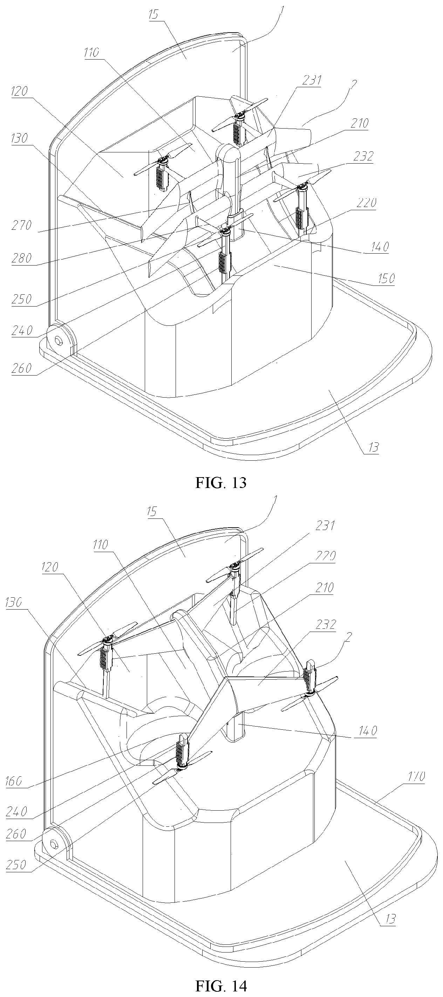

An embodiment of the present disclosure also proposes an unmanned aerial vehicle system (UAS), including the nest 1 and the UAV 2 mentioned in the above embodiments. As shown in Fig. 13 and Fig. 14, there are two embodiments of the UAS, both without depicting the tarpaulin 180 of the nest 1.

As shown in Fig. 13, is a UAS composed of the nest 1 of Fig. 1 and the UAV 2 of Figs. 5-8. The guide rods 220 of the UAV 2 are provided on the power rods 240 on the rear arm wings 232 of the UAV 2. The limiting platform 150 is provided on the landing ramp 11 of the nest 1. The body 210 is vertical when the UAV 2 lands, and the UAV 2 is stopped simultaneously by the limiting platform 150 and the limiting post 140, to ensure the stability of the UAV 2 after docking.

As shown in Fig. 14, is a UAS composed of the nest 1 of Fig. 2 and the UAV 2 of Figs. 9-12. The guide rods 220 of the UAV 2 are provided on the power rods 240 on the front arm wings 231 of the UAV 2. The body 210 of the UAV 2 is in a tilted state when the UAV 2 lands, and as the propellers 250 of the rear arm wings 232 are downwardly orientated, the avoidance space 160 is provided on the landing ramp 11 of the nest 1 to avoid the propellers 250.

In the past, in the design process of the UAV 2 and the nest 1, the nest 1 for the UAV 2 was designed based on the size and performance of an existing UAV, or the UAV 2 was matched to the existing nest 1. This form of matching requires one party to always compromise for defects of the other party, and fails to bring into play the advantages of integrity. In the UAS proposed in the embodiment of the present disclosure, the UAV 2 and its compatible nest 1 are designed to match each other, and the matching of their landing mode, onboard charging system, sensing system, etc. enables both of them to simultaneously exhibit their respective strengths in this field, and their characteristics can be perfectly combined in application scenarios, so as to achieve a synergistic effect where the whole is greater than the sum of its parts.

In the following, specific usage of the UAS is introduced by taking an inspection task as an example, when using the UAS,
the hatch cover 14 opens the nest 1, and the UAV 2 takes off in the rotorcraft mode and flies away from the nest 1;
when the UAV 2 reaches a specified safe altitude, the output of the power apparatuses on the rear arm wings 232 is increased, causing the UAV 2 to rotate around its center of gravity to reach the fixed-wing mode;
the UAV 2, upon reaching the fixed-wing mode, flies to an inspection point in this mode, after arriving at the inspection point, an output power of the power apparatuses on the rear arm wings 232 is reduced, causing the UAV 2 to rotate around its center of gravity to switch from the fixed-wing mode to the rotorcraft mode, for inspecting electric towers, power lines, etc., during the inspection, the UAV 2 flies in the rotorcraft mode, and switches to the fixed-wing mode for travel between inspection points;
after the inspection, the UAV 2 flies back to the nest 1 in the fixed-wing mode;
upon reaching the airspace above the nest 1, the UAV 2 switches from the fixed-wing mode to the rotorcraft mode and lands vertically back to the nest 1 in the rotorcraft mode;
during the landing of the UAV 2 back to the nest 1, the guide rods 220 of the UAV 2 contact the contact inclined surfaces 120 of the nest 1;
the UAV 2 slides downwards along the contact inclined surfaces 120, at which point the tail of the body contacts the limiting inclined surface 110, achieving three-point contact stabilization of the two guide rods 220 and the body, while the entire UAV constantly corrects its position under the influence of the guide portions 130;
the UAV 2 docks to the designated position, at which point the negative patch on the UAV 2 is adhered to the negative pressure plate 103 in the groove of the limiting post 140, while the positive charging top rod 102 extends outward and probes into the positive charging socket 201 of the UAV 2; and
the hatch cover 14 closes the nest 1.

The foregoing is only specific implementations of the present disclosure, however, the scope of protection of the present disclosure is not limited thereto, any person skilled in the art can easily think of various equivalent modifications or substitutions within the technical scope disclosed in the present disclosure, and these modifications or substitutions shall all be covered within the scope of protection of the present disclosure. Therefore, the scope of protection of the present disclosure shall be determined by the scope of protection of the claims.

## Claims

1. A nest, used for a vertical take-off and landing unmanned aerial vehicle, **characterized in that**, the nest comprises:
a landing ramp, the landing ramp having a landing position; and
a stopping structure, the stopping structure being arranged on the landing ramp, and being used for stopping the unmanned aerial vehicle from continuously moving downwards at the landing position.

2. The nest according to claim 1, **characterized in that**, the landing ramp comprises:
a limiting inclined surface, the limiting inclined surface having the landing position; and
contact inclined surfaces, the contact inclined surfaces being provided on both sides of the limiting inclined surface, guide portions being formed on the contact inclined surfaces, and the guide portions used for guiding the unmanned aerial vehicle to move to the landing position.

3. The nest according to claim 2, **characterized in that**, the guide portions are inclined from top to bottom in a direction close to the limiting inclined surface.

4. The nest according to claim 1, **characterized in that**, the stopping structure comprises a limiting post, the limiting post is provided on the landing ramp, a groove is formed between the limiting post and the landing ramp, and the groove is provided with a sensor patch radar, a positive charging top rod, and a negative pressure plate.

5. The nest according to claim 2, **characterized in that**, the stopping structure comprises a limiting platform, and the limiting platform is provided at lower ends of the guide portions.

6. The nest according to claim 1, **characterized in that**, the landing ramp is further provided with an avoidance space.

7. The nest according to claim 1, **characterized in that**, the nest further comprises:
a base plate, the landing ramp being provided on the base plate; and
a hatch cover, the hatch cover being rotatably provided on the base plate, for opening and closing the nest.

8. The nest according to claim 7, **characterized in that**, the hatch cover comprises:
a rotating frame, the rotating frame being rotatably provided and rotatable between a first position and a second position; and
a tarpaulin, one end of the tarpaulin being fixed at the first position, the other end of the tarpaulin being fixed on the rotating frame, and the tarpaulin enclosing the landing ramp inside when the rotating frame rotates from the first position to the second position.

9. The nest according to claim 8, **characterized in that**, the nest further comprises a back plate, the back plate being provided on the base plate and arranged at an angle to the base plate;
one end of the tarpaulin being provided on the back plate, the other end of the tarpaulin being provided on the rotating frame, the rotating frame rotating between the back plate and the base plate, and the tarpaulin enclosing the landing ramp inside when the rotating frame rotates from the back plate to the base plate.

10. An unmanned aerial vehicle (UAV), **characterized in that**, the unmanned aerial vehicle comprises:
a body;
arm wings, provided on both sides of the body, comprising front arm wings and rear arm wings; and
power apparatuses, provided on the arm wings to provide power for movement of the unmanned aerial vehicle, the power apparatuses being provided on both the front arm wings and the rear arm wings;
wherein, the unmanned aerial vehicle has a rotorcraft mode and a fixed-wing mode, when the unmanned aerial vehicle is in the rotorcraft mode, the power apparatuses disposed on the front arm wings and the rear arm wings are arranged one in front of the other in a horizontal direction.

11. The unmanned aerial vehicle according to claim 10, **characterized in that**, the power apparatus comprises:
a power rod, provided on the arm wing with a motor provided inside, the power rod being perpendicular to a horizontal plane when the unmanned aerial vehicle is in the rotorcraft mode;
a propeller, provided at a front end of the power rod and connected to the motor; and
an electronic speed controller (ESC), the ESC being used for regulating an output of the motor.

12. The unmanned aerial vehicle according to claim 11, **characterized in that**, the front arm wings are disposed at a lower portion of the body, and the rear arm wings are disposed at an upper portion of the body;
the power apparatuses on the front arm wings are disposed at lower portions of the front arm wings, and the power apparatuses on the rear arm wings are disposed at upper portions of the rear arm wings.

13. The unmanned aerial vehicle according to claim 12, **characterized in that**, the unmanned aerial vehicle further comprises longitudinal connecting wings, and the longitudinal connecting wings connect the front arm wings and the rear arm wings.

14. The unmanned aerial vehicle according to claim 12, **characterized in that**, the unmanned aerial vehicle further comprises vertical wings, the vertical wings are provided on the arm wings, and the power rods are provided on the vertical wings, such that
the propellers are disposed at positions beyond front-end surfaces of the arm wings, and front-extending surfaces of the arm wings are outside diameters of the propellers.

15. The unmanned aerial vehicle according to claim 11, **characterized in that**,
the arm wings are at an acute angle to the horizontal plane, when the unmanned aerial vehicle is in the rotorcraft mode;
the propellers on the front arm wings are disposed above the arm wings, and the propellers on the rear arm wings are disposed below the arm wings, or,
the propellers on the front arm wings are disposed below the arm wings, and the propellers on the rear arm wings are disposed above the arm wings.

16. The unmanned aerial vehicle according to claim 15, **characterized in that**, when the unmanned aerial vehicle is in the rotorcraft mode, a height difference between the propellers on the front arm wings and the rear arm wings is 0%-50% of a center-to-center distance between the motors on the front arm wings and the rear arm wings.

17. The unmanned aerial vehicle according to claim 10, **characterized in that**, both the front arm wings and the rear arm wings are delta wings and are arranged opposite each other.

18. The unmanned aerial vehicle according to claim 11, **characterized in that**, the unmanned aerial vehicle further comprises guide rods, the guide rods are provided on both sides of the body, and the guide rods are provided at rear ends of the power rods.

19. The unmanned aerial vehicle according to claim 10, **characterized in that**, the body is provided with a battery inside, and the body is provided with a positive charging socket and a negative charging patch at a tail.

20. An unmanned aerial vehicle system, **characterized in that**, comprising the nest according to any one of claims 1-9, and the nest according to any one of claims 10-19.
